# EUROPEAN PATENT SPECIFICATION

(11) **EP 1 998 576 B1**
(45) Date of publication and mention of the grant of the patent: **04.05.2016**
(21) Application number: 07737576.4
(22) Date of filing: 01.03.2007
(51) Int. Cl.: H04W 36/30, H04W 36/00, H04W 36/08, H04W 84/12, H04W 88/02

(54) **COMMUNICATION TERMINAL, ACCESS POINT SWITCHING METHOD, AND ACTIVE POINT SWITCHING CONTROL PROGRAM**
KOMMUNIKATIONSENDGERÄT, ZUGANGSPUNKT-UMSCHALTVERFAHREN UND AKTIVPUNKT-UMSCHALTSTEUERPROGRAMM
TERMINAL DE COMMUNICATION, PROCEDE DE COMMUTATION DE POINT D'ACCES ET PROGRAMME DE COMMANDE DE COMMUTATION DE POINT D'ACCES

(30) Priority: 01.03.2006 JP 2006055300
(43) Date of publication of application: 03.12.2008
(73) Proprietor: Lenovo Innovations Limited (Hong Kong), Quarry Bay, Hong Kong (HK)
(72) Inventor: NISHIMURA, Yasunori, c/o NEC Corporation, Tokyo 108-0014 (JP); MORIMOTO, Shinichi, c/o NEC Corporation, Tokyo 108-0014 (JP); OOMORI, Youko, c/o NEC Corporation, Tokyo 108-0014 (JP)
(74) Representative: Stork Bamberger
(86) International application number: PCT/JP2007/053880
(87) International publication number: WO 2007/100031

(56) References cited:
- JP-A- 09 107 573
- JP-A- 09 219 879
- JP-A- 11 136 185
- JP-A- 2002 320 251
- JP-A- 2004 056 509
- US-A1- 2005 138 178
- ORFANOS G ET AL: "An Adaptive MAC Protocol for MC-CDMA Adhoc Wireless Lan", PERSONAL, INDOOR AND MOBILE RADIO COMMUNICATIONS, 2005. PIMRC 2005. IE EE 16TH INTERNATIONAL SYMPOSIUM ON BERLIN, GERMANY 11-14 SEPT. 2005, PISCATAWAY, NJ, USA,IEEE, vol. 4, 11 September 2005 (2005-09-11), pages 2734-2741, XP010928188, DOI: 10.1109/PIMRC.2005.1651940 ISBN: 978-978-38007-2-4

## Description

### TECHNICAL FIELD

The present invention relates to a communication terminal that searches for an access point and switches the access point during travel (movement), an access point switching method used at the time of switching an access point, and an access point switching control program.

### BACKGROUND ART

In radio communication such as a wireless LAN (Local Area Network), it is unnecessary to connect a cable to a destination of communication. The wireless communication is therefore widely used by mobile communication terminals. A plurality of access points are attached to telephone poles and electronic equipment installed outdoors to cover a wide range by radio. Except for such a wireless LAN, each of a cellular phone and a PHS (Personal Handy-phone System) also uses a plurality of access points as wireless base stations, thereby realizing wireless communication in a wide area.

When a communication terminal travels (moves) in a wide-area wireless communication system in which access points are disposed in various places, to perform radio communication always in the best conditions, switching of the access point (handover) is necessary. For this purpose, an access point to which the communication terminal is to be switched is searched for.

In a conventional access point switching system, the reception level of an electric wave from an access point with which a communication terminal is performing communication at present is checked. When the reception level becomes lower than a threshold of handover which is set, a link channel establishment request is sent to another access point. In such handover, however, when the travel speed of the communication terminal increases to a certain extent and above, a problem occurs such that the distance between the communication terminal and the present access point becomes too long before the handover is carried out, and the communication is disconnected. To address the problem, a technique of detecting the travel speed (moving speed) of the communication terminal and changing the threshold of the handover in accordance with the detected speed has been proposed (refer to, for example, Patent Document 1).

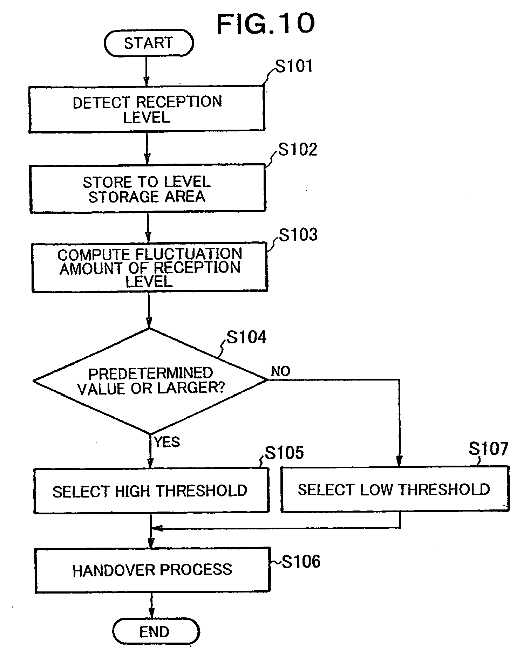

FIG. 10 shows the outline of an access point switch control method in the proposal. In the proposal, a communication terminal detects the reception level from an access point in predetermined time intervals (step S101) and stores detected reception levels in time series into a level storage area in the communication terminal (step S102). A reception level fluctuation amount is computed from the reception levels stored in the level storage area (step S103). Whether the fluctuation amount is equal to or larger than a predetermined value or not is determined (step S104).

When the fluctuation amount is equal to or larger than the predetermined value (YES), it is estimated that the speed of travel of the communication terminal is relatively high. In this case, a high threshold of the reception level is selected so that handover is easily performed (step S105), and a handover process for handing the access point to the next access point is performed (step S106). When the fluctuation amount is less than the predetermined value (NO in step S104), a low threshold is selected (step S107), and the handover process is performed (step S106).

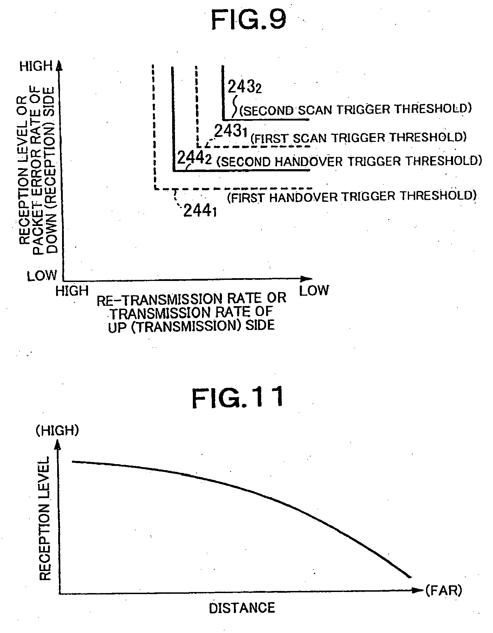

FIG. 11 shows the relation between the distance from an access point and the reception level described in the patent document 1 as the base of the proposal. Generally, the electric field strength decreases in inverse proportion to the fourth power of the distance from an access point as an electric wave emission point. Therefore, in an environment such that an access point exists in the middle of a flat land where no facility exists, the reception level simply decreases with distance from the access point as shown in FIG. 11. In such communication environment, it is effective to change the reception level at the time of handover in accordance with the travel speed of the communication terminal.

US 2005/138178 A1 discloses an access point search timing determining unit and a handover timing determining unit. According to US 2005/1381 78 A1 a scan may be conducted to identify one or more wireless access points within a current communication range when the signal quality of the current wireless connection falls below a scan threshold. The signal quality may be based on signal strength, signal-to-noise ratio (SNR), error rate, connection count or the like. After scanning is completed, by the wireless mobility manager it is determined whether the signal quality of the current wireless connection falls below a switch threshold. The switch threshold is either a pre-set value or a programmable value set by the user. Normally, the switch threshold is less than the scan threshold. If so, the wireless mobility manager allows the wireless station to establish a new wireless connection with another wireless access point selected from the one or more identified access points. Furthermore, US 2005/138178 A1 discloses that once AP scan logic identifies one or more available APs, AP switch logic further monitors the current wireless connection of the wireless connection to determine whether the signal strength of the current wireless connection falls below the switch threshold selected by a user.
**Patent Document 1:** JP-A 2000-197093 **(Japanese Unexamined Patent Application Publication No.** 2000-197093**) (paragraphs 0024 and 0027,** **FIGs. 3** **and** **5A****)**

### DISCLOSURE OF THE INVENTION

### PROBLEM TO BE SOLVED BY THE INVENTION

In reality, however, such simple communication environments are rare. For example, it is assumed that a source of generating noise having the same frequency as that of a frequency used by a communication terminal exists in a position close to an access point. When another communication terminal performs communication near an access point may correspond to such a situation. In this case, similarly, the reception level of the communication terminal decreases with distance from the access point. On the other hand, there is a case such that an electric wave transmitted from a communication terminal to an access point is disturbed by noise of another communication terminal and the reception characteristic of the access point deteriorates. It can also be regarded as deterioration in the transmission characteristic of the communication terminal.

The above case is just an example. Only by adjusting a threshold by using a reception level of a communication terminal, in some cases, handover cannot be carried out accurately and communication is interrupted.

An object of the present invention is to provide a communication terminal, an access point switching method, and an access point switching control program capable of properly performing handover under various communication environments.

### MEANS FOR SOLVING THE PROBLEM

A communication terminal of the present invention includes: a reception environment information measuring unit for measuring information of the reception environment between the communication terminal and an access point; a transmission environment information measuring unit for measuring information of the transmission enironment between the communication terminal and the access point; an access point search timing determining unit for determining a timing of searching for an access point to be switched by using a combination of the reception environment information measured by the reception environment information measuring unit and the transmission environment information measured by the transmission environment information measuring unit; an access point searching unit for searching for the access point to be switched at the access point search timing determined by the access point search timing determining unit; a handover timing determining unit for determining a timing of handover to the access point to be switched by using a combination of the reception environment information measured by the reception environment information measuring unit and the transmission environment information measured by the transmission environment information measuring unit; and a handover unit for performing handover to the access point searched by the access point searching unit at the handover timing determined by the handover timing determining unit.

A method of switching an access point in a communication terminal, of the present invention includes: a reception environment information measuring process for measuring information of the reception environment between the communication terminal and the access point; a transmission environment information measuring process for measuring information of the transmission environment between the communication terminal and the access point; an access point search timing determining process for determining a timing of searching for an access point to which the communication terminal is switched by using a combination of the reception environment information measured in the reception environment information measuring process and the transmission environment information measured in the transmission environment information measuring process; an access point searching process for searching the access point to which the communication terminal is to be switched at the determined access point searching timing; a handover timing determining process for determining a timing of handover to the access point to which the communication terminal is to be switched by using a combination of the reception environment information measured in the reception environment information measuring process and the transmission environment information measured in the transmission environment information measuring process; and a handover process for performing handover to the access point searched by the access point searching process at the handover timing determined by the handover timing determining process.

An access point switching control program for making a computer as a communication terminal for performing communication with an access point execute: a reception environment information measuring process for measuring information of the reception environment between the communication terminal and the access point; a transmission environment information measuring process for measuring information of the transmiss ion environment between the communication terminal and the access point; an access point search timing determining process for determining a timing of searching for an access point to which the communication terminal is to be switched of the communication terminal by using a combination of the reception environment information measured in the reception environment information measuring process and the transmission environment information measured in the transmission environment information measuring process; an access point searching process for searching for the access point to which the communication terminal is to be switched at the determined access point search timing; a handover timing determining process for determining a timing of handover to the access point to which the communication terminal is to be switched by using a combination of the reception environment information measured in the reception environment information measuring process and the transmission environment information measured in the transmission environment information measuring process; and a handover process for performing handover to the access point searched by the access point searching process at the handover timing determined by the handover timing determining process.

### EFFECT OF THE INVENTION

In the present invention, both the reception environment and the transmission environment of the communication terminal are observed. Consequently, handover can be realized in consideration of not only the reception environment of the communication terminal itself but also situations of the other party of communication.

### BRIEF DESCRIPTION OF THE DRAWINGS

FIG. 1 is a diagram showing an outline access point switching in a communication system using a wireless LAN.
FIG. 2 is a block diagram showing an outline of a circuit configuration of a wireless LAN terminal in an embodiment.
FIG. 3 is a characteristic diagram showing the relation between distance to an access point of a wireless LAN terminal and travel speed of the wireless LAN terminal itself in the embodiment.
FIG. 4 is an explanatory diagram showing the case when one threshold is provided for reception level and transmission packet error rate.
FIG. 5 is an explanatory diagram showing the case when two thresholds are provided in the embodiment.
FIG. 6 is an explanatory diagram showing the content of a threshold setting table in the embodiment.
FIG. 7 is a flowchart showing the state of calculation of the fluctuation rate of the reception level and transmission packet error rate in the wireless LAN terminal in the embodiment.
FIG. 8 is a flowchart showing the state of execution of handover based on a scan trigger in the wireless LAN terminal in the embodiment.
FIG. 9 is an explanatory diagram showing the possibility of use of various communication parameters as a modification possibility of the present invention.
FIG. 10 is a flowchart showing an access point switch controlling method which is conventionally proposed.
FIG. 11 is a characteristic diagram showing the relation between distance from an access point and a reception level.
FIG. 12 is a block diagram showing outline of a circuit configuration of a wireless LAN terminal in the embodiment.

### DESCRIPTION OF REFERENCE NUMERALS

- 201: LAN cable
- 202: access point
- 203: wireless LAN terminal
- 211: control unit
- 212: CPU
- 213: ROM
- 213T: threshold setting table
- 214: RAM
- 219: transmission packet error rate measuring unit
- 220: re-transmission rate measuring unit
- 221: re-reception rate measuring unit
- 222: reception level measuring unit
- 223: scanning unit
- 224: handover unit
- 243: scan trigger threshold
- 244: handover trigger threshold

### BEST MODE FOR CARRYING OUT THE INVENTION

The present invention will be described in detail below by the embodiments. In the following embodiments, reception environment information (communication parameters indicative of reception environments) will be described when using reception level, re-reception rate, or reception packet error rate. Transmission environment information (communication parameters indicative of transmission environments) will be described when using transmission packet error rate, re-transmission rate, or transmission transfer rate.

### First Embodiment

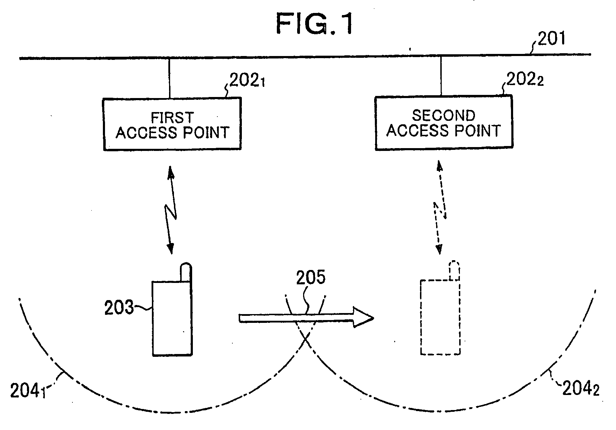

FIG. 1 is a diagram showing an outline of access point switching in a communication system using a wireless LAN. The communication system shown in FIG. 1 has first and second access points 202₁ and 202₂ connected to a LAN cable 201. A wireless LAN terminal 203 as a communication terminal belongs to a valid service area 204₁ of the first access point 202₁ but searches for the next access point since it travels in the direction of an arrow 205. Using the result of the search, the wireless LAN terminal 203 is handed over to a valid service area 204₂ of the second access point 202₂.

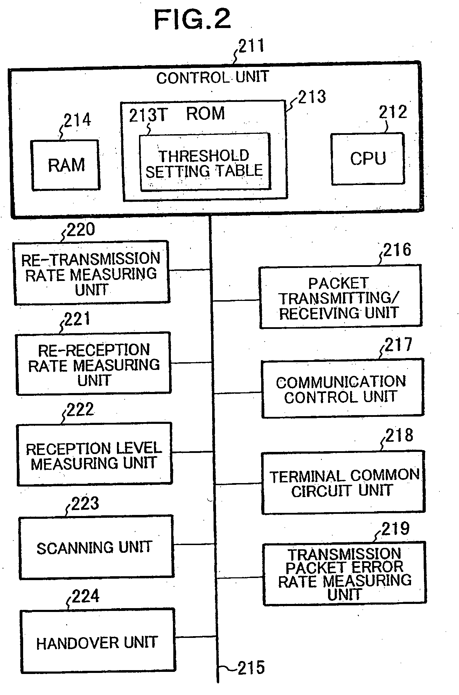

FIG. 2 shows an outline of a circuit cmfiguration of the wireless LAN terminal of the embodiment. The wireless LAN terminal 203 has a control unit 211 for performing general control. The control unit 211 has a CPU (Central Processing Unit) 212, a ROM (Read Only Memory) 213 storing a control program to be executed by the CPU 212 and fixed data, and a RAM (Random Access Memory) 214 for temporarily storing various data used for executing the control program. Apart of the RAM 214 may also be constructed as a nonvolatile memory by being backed up by a not-shown battery. An example of the fixed data stored in the ROM 213 is a threshold setting table 213T. The threshold setting table is provided as necessary. The case of using the threshold setting table 213T will be described later. The control unit 211 is connected to elements in the wireless LAN terminal 203 via a bus 215 as signal transmitting means as will be described later.

A packet transmitting/receiving unit 216 as one of the elements transmits/receives packets to/from an access point such as the first access point 202₁ shown in FIG. 1. A communication control unit 217 performs communication control at the time of transmitting/receiving packets. A terminal common circuit unit 218 is a common circuit part of the terminal excluding a circuit part having unique functions of the embodiment in the wireless LAN terminal 203. The common circuit part includes, for example, a data input unit having an operation panel and an output unit having an image output display.

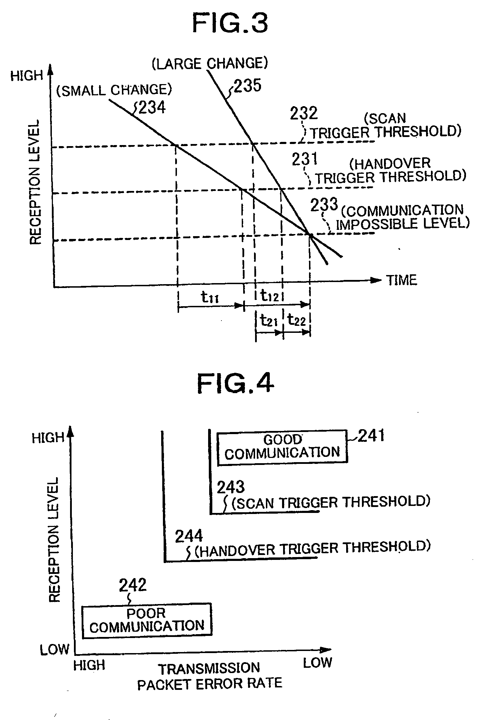

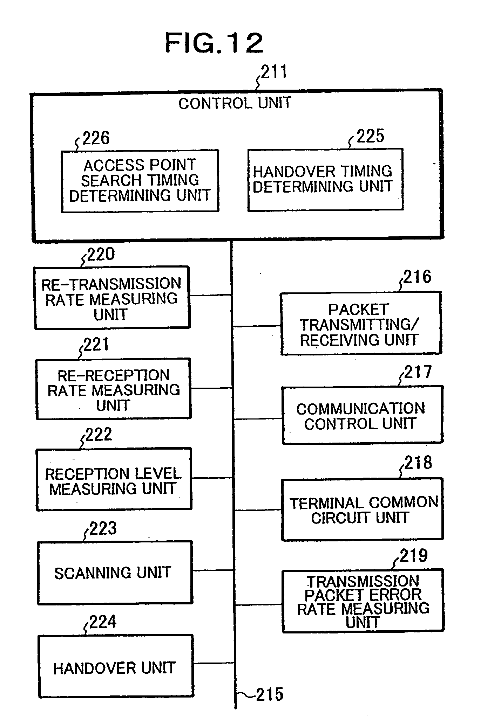

A transmission packet error rate measuring unit 219 measures the ratio of packets requested to be retransmitted due to occurrence of an error to the total number of packets transmitted from the wireless LAN terminal 203. A re-transmission rate measuring unit 220 measures the ratio of retransmitted packets to the transmitted packets. A re-reception rate measuring unit 221 measures the ratio of packets requested to be retransmitted to reception packets. A reception level measuring unit 222 measures the reception level of an electric wave. In order to determine whether handover is performed or not, a scanning unit 223 makes the reception level measuring unit 222 start/finish checking of the reception level and makes the transmission packet error rate measuring unit 219, re-transmission rate measuring unit 220, or re-reception rate measuring unit 221 start/finish measurement as necessary. Therefore, the longer the duration of activation of the scanning unit 223 is, the more the process of the wireless LAN terminal 203 increases and the more power is consumed. A handover unit 224 selects an access point to which the wireless LAN terminal 203 is to be switched on the basis of the search result of the scanning unit 223 and performs handover as a switching process. The scanning unit 223 serves as an access point searching unit that searches for an access point to which the wireless LAN terminal 203 is to be switched. The control unit 211 has the function of an access point search timing determining unit 226 for determining a timing of searching for an access point to which the wireless LAN terminal 203 is to be switched, shown in FIG. 12. For example, as shown in FIG. 4, when the reception level is smaller than a scan trigger threshold or the transmission packet error rate is larger than the scan trigger threshold, the control unit 211 controls start of the scanning unit 223 and determines a timing of searching for an access point.

The control unit 211 has the function of a handover timing determining unit 225 for determining a timing of handover to the access point to which the wireless LAN terminal 203 is to be switched, shown in FIG. 12. For example, as shown in FIG. 4, when the reception level is smaller than a handover trigger threshold or the transmission packet error rate is larger than the handover trigger threshold, the control unit 211 controls start of the handover unit 224 and determines a timing of handover.

The units 216 to 224 except for the control unit 211 may be constructed by hardware. At least a part of the units 216 to 224 may also be realized by software. In the latter case, the circuits are realized by software when the CPU 212 in the control unit 211 executes the control program stored in the ROM 212. The transmission packet error rate measuring unit 219 and the re-transmission rate measuring unit 220 correspond to a transmission environment information measuring unit, and the re-reception rate measuring unit 221 and the reception level measuring unit 222 correspond to a reception environment information measuring unit. The transmission packet error rate measuring unit 219, the re-transmission rate measuring unit 220, the re-reception rate measuring unit 221, and the reception level measuring unit 222 are provided as necessary. For example,

When the scan start control is performed with the scan trigger threshold of the reception level and transmission packet error rate, and the handover start control is performed with the handover trigger threshold of the reception level and transmission packet error rate, the re-transmission rate measuring unit 220 and the re-reception rate measuring unit 221 may not be provided. As necessary, a measuring unit for measuring other reception environment information or transmission environment information may be added.

FIG. 4 is a diagram showing the case when one threshold is provided for the reception level and the transmission packet error rate. The vertical axis expresses reception level of the wireless LAN terminal 203, and the horizontal axis expresses the transmission packet error rate. One scan trigger threshold 243 and one handover trigger threshold 244 are set between a good communication area 241 close to an access point and a poor communication area 242 far from an access point.

In the embodiment, the scan trigger threshold 243 and the handover trigger threshold 244 are set for the reception level and the transmission packet error rate. Consequently, when the transmission packet error rate becomes larger than the scan trigger threshold 243 even if the reception level does not change, the scanning unit 223 is started. When the transmission packet error rate becomes larger than the handover trigger threshold, handover is carried out. When the reception level becomes smaller than the scan trigger threshold 243 even if the transmission packet error rate does not change, the scanning unit 223 is started. When the reception level becomes smaller than the handover trigger threshold, handover is performed.

For example, when another communication terminal for performing transmission at the same frequency as that of the communication terminal itself exists near an access point, the reception level itself of a signal received from the access point at the terminal itself does not change. However, transmission of the terminal itself is disturbed by transmission of the other communication terminal, and the transmission packet error rate becomes high. In the embodiment, even in such situations, optimum handover can be realized in consideration also of the situations on the other side of the communication.

However, predetermined time is required for each of the scanning process by the scanning unit 223 and the handover process by the handover unit 224 shown in FIG. 2. Therefore, when the wireless LAN terminal 203 shown in FIG. 1 existing in the good communication area 241 travels toward the poor communication area 242, depending on the travel speed and a change in the communication environment, there is the possibility that the wireless LAN terminal 203 travels to the poor communication area 242 before handover is carried out, and enters a communication disable state.

A change in the reception level will be described as an example below. FIG. 3 shows the relation between the reception level in the wireless LAN terminal and time. In the diagram, the vertical axis expresses the reception level of the wireless LAN terminal 203 shown in FIG. 1, and the horizontal axis expresses lapse of time. The distance to an access point from the wireless LAN terminal exerts an influence on the reception level, and a change in the reception level to unit time corresponds to travel speed of the wireless LAN terminal itself. A threshold for starting handover is set as a handover trigger threshold 231. A value increased from the threshold only by a predetermined value is set as a scan trigger threshold 232 for starting a search for an access point. The scan trigger threshold 232 can be set by using an arbitrary one of various communication parameters such as the reception level from each of the access points and the transmission packet error rate.

It is now assumed that the wireless LAN terminal 203 exists near the first access point 202₁ in FIG. 1 and travels (moves) away. At the initial point, the reception level measuring unit 222 shown in FIG. 2 measures a reception level higher than the scan trigger threshold 232 shown in FIG. 3. As the wireless LAN terminal 203 travels away from the first access point 202₁, at a certain time point, the reception level measuring unit 222 measures the reception level equal to or lower than the scan trigger threshold 232. When the wireless LAN terminal 203 travels further away from the first access point 202₁, when the handover is not performed for a reason such that another access point cannot be found, the reception level drops to a reception level 233 shown in FIG. 3 at which communication cannot be performed with the present access point.

A change per unit time in the travel amount when the wireless LAN terminal 203 travels away from the first access point 202₁ at constant speed will be considered. A first linear line 234 shown in FIG. 3 indicates the case when a change in the travel amount per unit time is small, that is, the case when the travel speed of the communication terminal is low. On the other hand, a second linear line 235 indicates the case when a change in the travel amount per unit time is large, that is, the travel speed of the communication terminal is high. In the case of the first linear line 234, both time t11 from the scan trigger threshold 232 to the handover trigger threshold 231 and time t12 from the handover trigger 231 to the reception level 233 of the communication disable state is sufficiently long. In contrast, in the case of the second linear line 235, both time t21 from the scan trigger threshold 232 to the handover trigger threshold 231 and time t22 from the handover trigger 231 to the reception level 233 of the communication disable state is shorter than that in the case of the first linear line 234.

As a result, in the case when the two thresholds 231 and 232 are fixed, when the travel speed of the wireless LAN terminal 203 increases and the communication environment changes, there is the possibility that the reception level decreases to the reception level 233 of the communication disable state before handover to another access point is actually performed.

Although FIG. 3 shows the case using the reception level, the other wireless communication parameters such as the transmission packet error rate, re-transmission rate, and re-reception rate may be similarly used except for the following point. The higher the reception level is, the lower each of the transmission packet error rate, re-transmission rate, and re-reception rate is. The lower the reception level is, the higher the rates are.

Also in the case of using any of the wireless communication parameters, when the degree of a change per unit time of the travel amount when the wireless LAN terminal 203 travels away from the first access point 2021 varies, the time required for the reception level to drop to the reception level 233 of the communication disable state varies. Therefore, in the case where the two thresholds 231 and 232 are fixed, when the wireless LAN terminal 203 is traveling or wireless environment changes, it becomes difficult to promptly react to search for the next access point. In addition, since the reception level is used as the trigger of the access point, there is the case such that the wireless LAN terminal cannot accommodate to variations in the reception characteristic or the transmission characteristic of the wireless LAN terminal 203 or access point.

In the embodiment, it is therefore preferable to use a combination of the reception level as a communication parameter on the down (reception) side and transmission packet error rate as a communication parameter of the up (transmission) side and use handover trigger thresholds 231 and scan trigger thresholds 232 shown in FIG. 3 in two stages. Although the thresholds are set in two stages, it is for convenience of the description of the embodiment. In practice, thresholds in multiple stages may be used. The wireless LAN terminal 203 monitors the degree of a change in the wireless communication parameters and, according to the degree, properly uses the thresholds in two stages. Although the rate of a change (fluctuation rate) of the reception level is used as the degree of a change in the wireless communication parameter, the rate of a change (fluctuation rate) of any of the other wireless communication parameters indicative of transmission environment or reception environment such as the transmission packet error rate, re-transmission rate, and re-reception rate may be used.

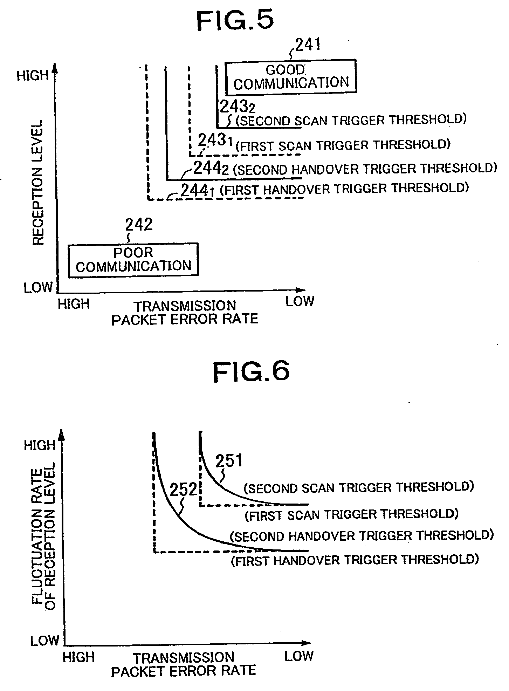

FIG. 5 shows the case when thresholds in two stages are set in the embodiment. The vertical axis expresses the reception level of the wireless LAN terminal 203, and the horizontal axis expresses the transmission packet error rate. A second scan trigger threshold 243₂ is set closest to the good communication area 241. Toward the poor communication area 242, a first scan trigger threshold 243₁, a second handover trigger threshold 244₂, and a first handover trigger threshold 244₁ are set in order.

As a result, for example, when the wireless LAN terminal 203 travels (moves) away from the first access point 202₁, the control unit 211 shown in FIG. 2 measures the reception level by the reception level measuring unit 222, and measures the transmission packet error rate by the transmission packet error rate measuring unit 219. In the case when a change with time of the reception level is large and the transmission packet error rate itself is also high, to assure time for a process, the second scan trigger threshold 234₂ and second handover trigger threshold 244₂ are selected as thresholds. Different from the above, in the case when a change with time of the reception level is small and the transmission packet error rate itself is low, the first scan trigger threshold 234₁ and first handover trigger threshold 244₁ are selected as thresholds.

There is also the case when the transmission packet error rate itself is low though a change with time of the reception level is large and, on the contrary, the case when the transmission packet error rate itself is high through a change with time of the reception level is small. In those cases, it is an issue to employ which threshold. In such a case, the thresholds are set using communication parameters of the fluctuation rate of the reception level and the transmission packet error rate. The threshold setting table 213T shown in FIG. 2 is used for this purpose.

FIG. 6 shows the content of the threshold setting table. Description will be given also with reference to FIG. 5. In the threshold setting table 213T, the fluctuation rate of the reception level of the wireless LAN terminal 203 and the transmission packet error rate are entered. When the cross point of them is higher than a scan trigger threshold determination curve 251, the second scan trigger threshold 243₂ is set. Specifically, in the case when the fluctuation rate of the reception level is very high and the transmission packet error rate is very low, the second scan trigger threshold 243₂ and the second handover trigger threshold 244₂ are set. In this case, the scanning unit 223 shown in FIG. 2 starts scanning of the reception level from a stage of a relatively high reception level and, similarly, handover is performed from a stage of a relatively high reception level. Therefore, even when the travel speed of the wireless LAN terminal 203 is high, the handover process is performed at the early stage, and the danger that communication is disabled is reduced.

On the contrary, when the fluctuation rate of the reception level of the wireless LAN terminal 203 and the transmission packet error rate are entered and the cross point of them is below a scan trigger threshold determination curve 252, the first scan trigger threshold 243₁ and the first handover trigger threshold 244₁ are set. Specifically, in the case when the fluctuation rate of the reception level is very low and the transmission packet error rate is very high, the first scan trigger threshold 243₁ and the first handover trigger threshold 244₁ are set. In this case, the scanning unit 223 shown in FIG. 2 starts scanning of the reception level after the reception level becomes relatively low and, similarly, handover is performed after the reception level becomes relatively low. The reason is that, in the case when the travel speed of the wireless LAN terminal 203 is low, even when the handover process is performed late, the danger that communication is disabled is low, and power consumption of the wireless LAN terminal 203 is also reduced.

On the other hand, in the case when the cross point of the fluctuation rate of the reception level and the transmission packet error rate exists in an area below the scan trigger threshold determination curve 251 and higher than the handover trigger threshold determination curve 252, the first scan trigger threshold 243₁ and the second handover trigger threshold 244₂ are set. The start of the scan of the scanning unit 223 is not hastened but the handover trigger threshold itself is set to be high in order to realize both power saving and reliability of handover.

Depending on the configuration of an access point switching system 200 (FIG. 2), one threshold determination curve may be set in the threshold setting table 213T. In this case, either setting of the second scan trigger threshold 243₂ and the second handover trigger threshold 244₂ or setting of the first scan trigger threshold 2431 and the first handover trigger threshold 244₁ is allowed to be selected depending on whether the fluctuation rate of the reception level and the transmission packet error rate are positioned on upper or lower side of the threshold determination curve.

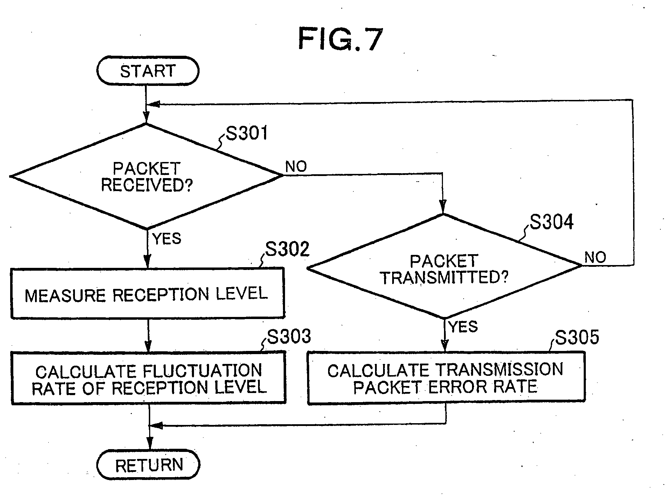

FIG. 7 shows a state of calculation of the reception level fluctuation rate and the transmission packet error rate in the wireless LAN terminal. This is a process as the base of calculation of the scan trigger threshold and the handover trigger threshold. The process will be described also with reference to FIG. 2. When the packet transmitting/receiving unit 216 receives a packet (YES in step S301), the wireless LAN terminal 203 measures the reception level at that time point by the reception level measuring unit 222 (step S302). By comparing the measured reception level with the reception levels in the past, the fluctuation rate of the reception level is calculated (step S303).

When the packet transmitting/receiving unit 216 transmits a packet (NO in step S301 and YES in step S304), the ratio of re-transmitted packets to the transmitted packets, that is, the transmission packet error rate is calculated (step S305). The calculation results are sequentially overwritten in the predetermined area in the RAM 214. That is, the latest reception level fluctuation rate and the latest transmission packet error rate are recorded in the area in the RAM 214.

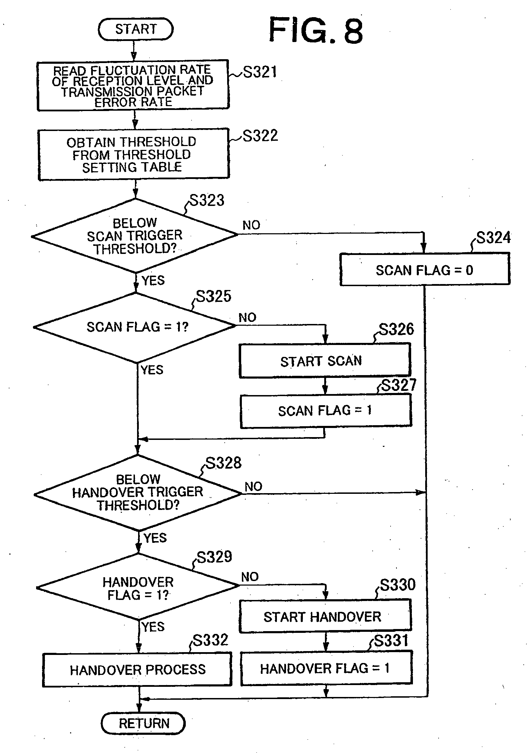

FIG. 8 shows the state of execution of handover based on a scan trigger of the wireless LAN terminal. The process is executed by the control unit 211 shown in FIG. 2 in predetermined cycles. The process will be described also with reference to FIG. 2. First, the control unit 211 reads the latest reception level fluctuation rate and the latest transmission packet error rate written in the predetermined area in the RAM 214 by the process described with reference to FIG. 7 (step S321). The control unit 211 obtains the scan trigger threshold 243 and the handover trigger threshold 244 by using the threshold setting table 213T (step S322). That is, at this stage, the first scan trigger threshold 243₁ or the second scan trigger threshold 243₂, and the first handover trigger threshold 244₁ or the second handover trigger threshold 244₂ are determined.

Next, the control unit 211 determines whether or not the combination of the reception level fluctuation rate and the transmission packet error rate at present is less than the scan trigger threshold (step S323). The scan trigger threshold is the first scan trigger threshold 243₁ or the second scan trigger threshold 243₂ determined in step S322. When the combination is equal to or higher than the scan trigger threshold (NO in step S323), a scan flag is set to "0" (step S324). The scan flag is a flag for determining which scan is already executed or not. When "1" is set for the scan flag, it expresses that a scan is being executed. When "0" is set for the scan flag, it means that it is unnecessary to perform a scan. In this case, the series of processes is finished (return).

On the other hand, when the combination is less than the scan trigger threshold (YES in step S323), a check is made to see whether "1" is set for the scan flag at present or not (step S325). When "1" is not set for the scan flag (NO), it means that the scanning unit 223 has not performed a scan yet. In this case, a scan is started (step S326) and the scan flag is changed to "1" (step S327). The control unit 211 moves to the next step S328. When "1" is set for the present scan flag in step S325 (YES), the control unit 211 moves directly to step S328.

In step S328, whether the combination is less than the handover trigger threshold or not is determined. The handover trigger threshold is the first handover trigger threshold 244₁ or the second handover trigger threshold 244₂ determined in step S322. When the combination is not less than the handover trigger threshold (NO), the process is finished without performing the handover process (return).

In the case when the combination is less than the handover trigger threshold (YES in step S328), a check is made to see whether "1" is set for the handover flag or not (step S329). The handover flag is a flag for determining which of the handover process is already executed or not. When "1" is set for the handover flag, it expresses that the handover is being executed.

In the case when "0" is set for the handover flag (NO), the handover process has not yet started In this case, handover is started (step S330), and "1" is set for the handover flag (step S331). In the case when "1" is set for the handover flag (YES in step S329), the handover process is continued (step S332).

A concrete example will be described. As shown in FIG. 1, it is assumed that the wireless LAN terminal 203 travels rapidly from an area near the first access point 202₁ toward the second access point 202₂. When it is assumed that the transmission packet error rate is about normal, the reception level fluctuation rate is high. Consequently, the second scan trigger threshold 243₂ and the second handover trigger threshold 244₂ are selected in step S322 in FIG. 8. Therefore, the scanning unit 223 starts a scan of the reception level of electric wave by using the second scan trigger threshold 243₂ earlier than the case when the first scan trigger threshold 243₁ is set. The handover process to the second access point 202₂ is started with the second handover trigger threshold 244₂ earlier than the case where the first handover trigger threshold 244₁ is set. As a result, the situation such that the communication is disabled due to delay in the start of the handover process can be avoided.

On the other hand, when the wireless LAN terminal 203 travels at relatively low speed from an area near the first access point 202₁ toward the second access point 202₂, the first scan trigger threshold 243₁ and the first handover trigger threshold 244₁ are selected in step S322. Therefore, the scanning unit 223 starts a scan of the reception level of electric wave by using the first scan trigger threshold 243₁ later than the case when the second scan trigger threshold 243₂ is set. The handover process to the first access point 202₁ is started with the first handover trigger threshold 244₁ later than the case when the second handover trigger threshold 244₂ is set. As a result, the process of the wireless LAN terminal 203 is reduced, and power consumption can be reduced.

It is also assumed that the wireless LAN terminal 203 travels at normal speed from an area near the first access point 202₁ toward the second access point 202₂, the communication environment is bad, and the transmission packet error rate is high. In such a case, the second scan trigger threshold 243₂ and the second handover trigger threshold 244₂ are selected in step S322 in FIG. 8. Therefore, the scanning unit 223 starts a scan of the reception level of electric wave from each of access points by using the second scan trigger threshold 243₂ earlier than the case when the first scan trigger threshold 243₁ is set. The handover process to the second access point 202₂ is started with the second handover trigger threshold 244₂ earlier than the case when the first handover trigger threshold 244₁ is set. As described above, even when the communication environment is bad, selection of an access point at a switch destination and the handover process can be started in good time. Therefore, a situation such that no handover is performed and the communication is disabled can be avoided more reliably.

The case when the travel speed of the wireless LAN terminal 203 is high and the special case when the communication environment is bad and the transmission packet error rate is high have been concretely described above. Also for various combinations between the travel speed of reception environment information or transmission environment information and the communication environment (the reception environment information or transmission environment information), handover can be performed more preferably as compared with the conventional technique. This will not be described.

### Second Embodiment

In the foregoing embodiment, the threshold for handover is adjusted by using the two communication parameters of the reception level fluctuation rate and the transmission packet error rate. However, the invention is not limited to the embodiment. By using the re-transmission rate measuring unit 220 and the re-reception rate measuring unit 221 shown in FIG. 2 instead or combining them with the reception level and the transmission packet error rate, high-reliability handover control can be similarly performed.

FIG. 9 corresponds to FIG. 5 and shows that either the reception level or the packet error rate can be employed for the down (reception) side and either the number of re-transmission times, re-transmission rate, or transmission rate can be employed for the up (transmission) side. The user can most effectively set thresholds for a scan trigger and a handover trigger by arbitrarily combining the communication parameters. Obviously, communication parameters other than the above may be used as communication parameters for setting thresholds. The wireless LAN terminal 203 of FIG. 2 described in the embodiment has the re-transmission rate measuring unit 220 and the re-reception rate measuring unit 221 in addition to the transmission packet error rate measuring unit 219 and the reception level measuring unit 222 on the precondition that the communication parameters are arbitrarily combined. In FIG. 9, the reception level itself is used for adjusting the threshold. As described in the embodiment, obviously, the fluctuation rate of the reception level may be used instead. Specifically, in the case of selecting the scan trigger threshold and the handover threshold, in place of using the fluctuation rates of parameters indicative of reception environment and transmission environment, parameters (reception level and transmission packet error rate) indicative of the reception environment and the transmission environment may be used. In the case of selecting the scan trigger threshold and the handover threshold, two fluctuation rates of parameters indicative of reception environment and transmission environment, for example, the fluctuation rate of the reception level and that of the transmission packet error rate may be used.

As shown in FIG. 9, by setting the scan trigger threshold and the handover trigger threshold by a combination of the communication parameters of the up (transmission) side and the down (reception) side, an access point can be searched more reliably under various communication environments of different reception characteristics and transmission characteristics.

Each of the number of the up (transmission) communication parameter and the number of the down (reception) communication parameter is not limited to one. It is also possible to add a plurality of communication parameters while being weighted for each of the up (transmission) side and the down (reception) side and set a threshold for a combined communication parameter. Consequently, the state of the wireless LAN terminal 203 can be accurately grasped, and handover can be performed reliably. By properly setting a scan trigger, the embodiment can contribute to power saving particularly of a portable communication terminal.

Although switching of an access point in a wireless LAN terminal using a wireless LAN has been described in the first and second embodiments, naturally, the present invention can be applied generally to communication terminals for performing communications by radio while determining an access point from a plurality of access points.

In the case of realizing switching of an access point according to the present invention by a program using a computer as a wireless LAN terminal, the present invention is realized as a program product stored in a ROM as a storage portion of a computer and having a code for making the computer execute the access point switching method described with reference to FIGs. 7 and 8. The computer can be constructed by a CPU, a ROM, a RAM, a data input unit having an operation panel, an output unit having a display for outputting an image, and a data bus connecting the elements. A ROM, a flash memory, a DVD, and the like as computer readable media that stores the program for executing the access point switching method described with reference to FIGs. 7 and 8 are also included in the scope of right of the present invention. The right of the present invention includes the program itself. In the case of downloading the program to a communication terminal via an access point, the right of the invention also includes the act of transmitting/receiving the program.

In the foregoing first and second embodiments, the reception environment information and the transmission environment information of the wireless LAN terminal whose access point is to be switched is measured, and measurement results are combined. The combination of the measurement results is used to search an access point to be switched of the wireless LAN terminal and to perform the handover. Conventionally, only the reception level of the wireless LAN terminal is checked, so that only a part of the reception environment information is checked. In the present embodiment, both the reception environment information and the transmission environment information is checked. Therefore, fluctuations in the various communication environments can be grasped more accurately, and a timing of searching for an access point and a timing of the handover can be set, so that reliability of the access point switching improves. By observing the communication environment by its fluctuation rate, whether or not it is necessary to promptly search for an access point and handover can be determined. A situation such that handover fails and communication is disabled can be effectively avoided.

It is therefore to be understood that the foregoing embodiments are illustrative and not restrictive. The scope of the invention is defined by the scope of claims and is not limited by the description and the abstract. Further, all modifications and changes belonging to the equivalent scope of the scope of claims of the present invention are within the scope of the present invention.

## Claims

1. A communication terminal comprising a reception environment information measuring unit (221, 222) for measuring information of reception environment between the communication terminal and an access point, the communication terminal comprising:
a transmission environment information measuring unit (219, 220) for measuring information of transmission environment between the communication terminal and the access point, the transmission environment information being at least one of transmission packet error rate, re-transmission rate, and transmission rate;
an access point search timing determining unit (211) for determining a timing of searching for an access point to be switched by using a combination of a first comparison result and a second comparison result, the first comparison result being a comparison result between the reception environment information-and a first threshold (243, 243₁, 243₂) for determining the timing of searching, the second comparison result being a comparison result between the transmission environment information and a second threshold (243, 243₁, 243₂) for determining the timing of searching, the reception environment information being at least one of reception level, re-reception rate, and reception packet error rate;
an access point searching unit (223) for searching for the access point to be switched at the access point search timing determined by the access point search timing determining unit;
a handover timing determining unit (211) for determining a timing of handover to the access point to be switched by using a combination of a third comparison result and a fourth comparison result, the third comparison result being a comparison result between the reception environment information and a third threshold (244, 244₁, 244₂) for determining the timing of handover, the fourth comparison result being a comparison result between the transmission environment information and a fourth threshold (244, 244₁, 244₂) for determining the timing of handover; and
a handover unit (224) for performing handover to the access point searched by the access point searching unit at the handover timing determined by the handover timing determining unit.

2. The communication terminal according to claim 1, wherein a determination criterion of each of the access point search timing determining unit (211) and the handover timing determining unit (211) is set in a plurality of stages.

3. The communication terminal according to claim 2, wherein the determination criterion which is set in plurality of stages is determined on the basis of fluctuation rate of the reception environment information or fluctuation rate of the transmission environment information.

4. The communication terminal according to claim 2, wherein the determination criterion which is set in a plurality of stages is determined on the basis of the fluctuation rate of the reception environment information and the transmission environment information, or the reception environment information and the fluctuation rate of the transmission environment information.

5. The communication terminal according to claim 2, wherein the determination criterion which is set in a plurality of stages is determined on the basis of the reception environment information, the transmission environment information, or a combination of the reception environment information and the transmission environment information.

6. The communication terminal according to claim 3, wherein the higher the fluctuation rate of the reception environment information or the fluctuation rate of the transmission environment information is, the longer is the time allowance of the determination criterion of the access point search timing determining unit (211) and the handover timing determining unit (211).

7. The communication terminal according to claim 1, wherein each of the reception environment information and the transmission environment information is constructed by arbitrary number of communication parameters indicative of the corresponding environment, predetermined weights are applied to the communication parameters of each of the environments, and the weighted communication parameters are combined.

8. A method of switching an access point in a communication terminal, comprising a reception environment information measuring process for measuring information of reception environment between the communication terminal and the access point, the method comprising:
a transmission environment information measuring process for measuring information of transmission environment between the communication terminal and the access point, the transmission environment information being at least one of transmission packet error rate, re-transmission rate, and transmission rate;
an access point search timing determining process for determining a timing of searching for an access point to which the communication terminal is to be switched by using a combination of a first comparison result and a second comparison result, the first comparison result being a comparison result between the reception environment information and a first threshold (243, 243₁, 243₂) for determining the timing of searching, the second comparison result being a comparison result between the transmission environment information and a second threshold (243, 243₁, 243₂) for determining the timing of searching, the reception environment information being at least one of reception level, re-reception rate, and reception packet error rate;
an access point searching process for searching for the access point to which the communication terminal is to be switched at the determined access point searching timing;
a handover timing determining process for determining a timing of handover to the access point to which the communication terminal is to be switched by using a combination of a third comparison result and a fourth comparison result, the third comparison result being a comparison result between the reception environment information and a third threshold (244, 244₁, 244₂) for determining the timing of handover, the fourth comparison result being a comparison result between the transmission environment information and a fourth threshold (244, 244₁, 2442) for determining the timing of handover; and
a handover process for performing handover to the access point searched by the access point searching process at the handover timing determined by the handover timing determining process.

9. The access point switching method according to claim 8, wherein a determination criterion of each of the access point search timing determining process and the handover timing determining process is set in a plurality of stages.

10. The access point switching method according to claim 9, wherein the determination criterion which is set in plurality of stages is determined on the basis of fluctuation rate of the reception environment information or fluctuation rate of the transmission environment information.

11. The access point switching method according to claim 9, wherein the determination criterion which is set in a plurality of stages is determined on the basis of the fluctuation rate of the reception environment information and the transmission environment information, or the reception environment information and the fluctuation rate of the transmission environment information.

12. The access point switching method according to claim 10, wherein the higher the fluctuation rate of the reception environment information or the fluctuation rate of the transmission environment information is, the longer is the time allowance of the determination criterion of the access point search timing determining process and the handover timing determining process.

13. The access point switching method according to claim 8, wherein each of the reception environment information and the transmission environment information is constructed by arbitrary number of communication parameters indicative of the corresponding environment, predetermined weights are applied to the communication parameters of each of the environments, and the weighted communication parameters are combined.

14. An access point switching control program for making a computer as a communication terminal for performing communication with an access point execute
a reception environment information measuring process for measuring information of reception environment between the communication terminal and the access point, the program being adapted to make the computer execute:
a transmission environment information measuring process for measuring information of transmission environment between the communication terminal and the access point, the transmission environment information being at least one of transmission packet error rate, re-transmission rate, and transmission rate;
an access point search timing determining process for determining a timing of searching for an access point to which the communication terminal is to be switched by using a combination of a first comparison result and a second comparison result, the first comparison result being a comparison result between the reception environment information and a first threshold (243, 243₁, 243₂) for determining the timing of searching, the second comparison result being a comparison result between the transmission environment information and a second threshold (243, 243₁, 243₂) for determining the timing of searching, the reception environment information being at least one of reception level, re-reception rate, and reception packet error rate;
an access point searching process for searching for the access point to which the communication terminal is to be switched at the determined access point search timing;
a handover timing determining process for determining a timing of handover to the access point to which the communication terminal is.to be switched by using a combination of a third comparison result and a fourth comparison result, the third comparison result being a comparison result between the reception environment information and a third threshold (244, 244₁, 244₂) for determining the timing of handover, the fourth comparison result being a comparison result between the transmission environment information and a fourth threshold (244, 244₁, 244₂) for determining the timing of handover; and
a handover process for performing handover to the access point searched by the access point searching process at the handover timing determined by the handover timing determining process.

## Patentansprüche

1. Ein Kommunikationsendgerät umfassend eine Empfangsumgebungsinformationsmesseinheit (221,222) zur Messung von Informationen aus einer Empfangsumgebung zwischen dem Kommunikationsendgerät und einem Zugangspunkt, wobei das Kommunikationsendgerät umfasst:
eine Übertragungsumgebungsinformationsmesseinheit (219, 220) zur Messung von Informationen der Übertragungsumgebung zwischen dem Kommunikationsendgerät und dem Zugangspunkt, wobei die Übertragungsumgebungsinformationsmesseinheit eine Übertragungspaketfehlerrate, eine Wiederübertragungsrate und/oder eine Übertragungsgeschwindigkeit ist;
eine Zugangspunkt-Suchzeitbestimmungseinheit (211) zur Bestimmung eines Zeitpunkts der Suche nach dem Zugangspunkt, die durch Verwendung einer Kombination aus einem ersten Vergleichsergebnis und einem zweiten Vergleichsergebnis zu schalten ist, wobei das erste Vergleichsergebnis ein Vergleichsergebnis zwischen der Empfangsumgebungsinformation und einer ersten Schwelle (243, 243₁, 243₂) zur Bestimmung des Suchzeitpunkts ist, das zweite Vergleichsergebnis ein Vergleichsergebnis zwischen der Übertragungsumgebungsinformation und einer zweiten Schwelle (243, 243₁, 243₂) zur Bestimmung des Suchzeitpunkts ist, die Empfangsumgebungsinformation ein Empfangspegel, eine Wiederaufnahmerate und/oder eine Empfangspaketfehlerrate ist;
eine Zugangspunkt-Sucheinheit (223) für die Suche nach dem Zugangspunkt, die zu der durch die Zugangspunkt-Suchbestimmungseinheit bestimmten Zugangspunkt-Suchzeit zu schalten ist;
eine Übergabezeitpunkt-Bestimmungseinheit (211) zur Bestimmung eines Zeitpunkts der Übergabe an den Zugangspunkt, die durch Verwendung einer Kombination aus einem dritten Vergleichsergebnis und einem vierten Vergleichsergebnis zu schalten ist, wobei das dritte Vergleichsergebnis ein Vergleichsergebnis zwischen Empfangsumgebungsinformation und einer dritten Schwelle (244, 244₁, 244₂) zur Bestimmung des Zeitpunktes der Übergabe ist, das vierte Vergleichsergebnis ein Vergleichsergebnis zwischen Übertragungsumgebungsinformation an und einer vierten Schwelle (244, 244₁, 244₂) zur Bestimmung der Übergabezeit ist; und
eine Übergabeeinheit (224) zum Ausführen der Übergabe an den Zugangspunkt gesucht durch die Zugangspunkt-Sucheinheit am von der Übergabezeitpunkt-Bestimmungseinheit bestimmten Übergabezeitpunkt.

2. Das Kommunikationsendgerät nach Anspruch 1, wobei ein Bestimmungskriterium jeder Zugangspunkt-Suchzeitbestimmungseinheit (211) und der Übergabezeitpunkt-Bestimmungseinheit (211) in mehreren Stufen festgesetzt ist.

3. Das Kommunikationsendgerät nach Anspruch 2, wobei das Bestimmungskriterium, welches in mehreren Stufen festgesetzt ist, auf Basis der Fluktuationsrate der Empfangsumgebungsinformation oder der Fluktuationsrate der Übertragungsumgebungsinformation bestimmt wird.

4. Das Kommunikationsendgerät nach Anspruch 2, wobei das Bestimmungskriterium, welches in mehreren Stufen festgesetzt ist, auf Basis der Fluktuationsrate der Empfangsumgebungsinformation und der Übertragungsumgebungsinformation oder der Empfangsumgebungsinformation und der Fluktuationsrate der Übertragungsumgebungsinformation bestimmt wird.

5. Das Kommunikationsendgerät nach Anspruch 2, wobei das Bestimmungskriterium, welches in mehreren Stufen festgesetzt ist, auf Basis der Empfangsumgebungsinformation, der Übertragungsumgebungsinformation oder einer Kombination aus Empfangsumgebungsinformation und Übertragungsumgebungsinformation bestimmt wird.

6. Das Kommunikationsendgerät nach Anspruch 3, wobei die Zeittoleranz des Bestimmungskriteriums der Zugangspunkt-Suchzeitbestimmungseinheit (211) und der Übergabezeitpunkt-Bestimmungseinheit (211) umso länger ist, je höher die Fluktuationsrate der Empfangsumgebungsinformation oder die Fluktuationsrate der Übertragungsumgebungsinformation ist.

7. Das Kommunikationsendgerät nach Anspruch 1, wobei jede der Empfangsumgebungsinformation und der Übertragungsumgebungsinformation durch eine beliebige Anzahl an Kommunikationsparametern, die auf die entsprechende Umgebung hinweisen, erstellt wird, vorbestimmte Gewichtungen auf die Kommunikationsparameter jeder der Umgebungen angewendet werden und die gewichteten Kommunikationsparameter kombiniert werden.

8. Verfahren zum Schalten eines Zugangspunktes in einem Kommunikationsendgerät, umfassend einen Empfangsumgebungsinformationsmessprozess zur Messung von Informationen der Empfangsumgebung zwischen dem Kommunikationsendgerät und dem Zugangspunkt, wobei das Verfahren umfasst:
einen Empfangsumgebungsinformationsmessprozess zur Messung von Informationen der Übertragungsumgebung zwischen dem Kommunikationsendgerät und dem Zugangspunkt, wobei die Übertragungsumgebungsinformation eine Paketübertragungsfehlerrate, eine Wiederübertragungsrate und/oder eine Übertragungsgeschwindigkeit ist;
einen Zugangspunkt-Suchzeitbestimmungsprozess zur Bestimmung eines Zeitpunkts der Suche nach dem Zugangspunkt, bei dem das Kommunikationsendgerät geschaltet wird, durch Verwendung einer Kombination aus einem ersten Vergleichsergebnis und einem zweiten Vergleichsergebnis, wobei das erste Vergleichsergebnis ein Vergleichsergebnis zwischen der Empfangsumgebungsinformation und einer ersten Schwelle (243, 243₁, 243₂) zur Bestimmung des Suchzeitpunkts ist, das zweite Vergleichsergebnis ein Vergleichsergebnis zwischen der Übertragungsumgebungsinformation und einer zweiten Schwelle (243, 243₁, 243₂) zur Bestimmung des Suchzeitpunkts ist, wobei die Empfangsumgebungsinformation ein Empfangspegel, eine Wiederaufnahmerate und/oder eine Empfangspaketfehlerrate ist;
einen Zugangspunkt-Suchprozess für die Suche nach dem Zugangspunkt, zu dem das Kommunikationsendgerät an dem bestimmten Zugangspunkt-Suchzeitpunkt zu schalten ist;
einen Übergabezeitpunkt-Bestimmungsprozess zur Bestimmung eines Zeitpunkts der Übergabe an den Zugangspunkt an den das Kommunikationsendgerät durch eine Kombination von einem dritten Vergleichsergebnis und einem vierten Vergleichsergebnis zu schalten ist, wobei das dritte Vergleichsergebnis ein Vergleichsergebnis zwischen Empfangsumgebungsinformation und einer dritten Schwelle (244, 244₁, 244₂) zur Bestimmung des Zeitpunktes der Übergabe ist, das vierte Vergleichsergebnis ein Vergleichsergebnis zwischen Übertragungsumgebungsinformationen und einer vierten Schwelle (244, 244₁, 244₂) zur Bestimmung der Übergabezeit ist; und
einen Übergabeprozess zum Ausführen der Übergabe an den Zugangspunkt, ermittelt durch den Zugangspunkt-Suchprozess am von dem Übergabezeitpunkt-Bestimmungsprozess bestimmten Übergabezeitpunkt.

9. Das Zugangspunktschaltverfahren nach Anspruch 8, wobei ein Bestimmungskriterium jedes Zugangspunkt-Suchzeitbestimmungsprozesses und des Übergabezeitpunkt-Bestimmungsprozesses in mehreren Stufen festgesetzt ist.

10. Das Zugangspunktschaltverfahren nach Anspruch 9, wobei das Bestimmungskriterium, welches in mehreren Stufen festgesetzt ist, auf Basis der Fluktuationsrate von der Empfangsumgebungsinformation oder der Fluktuationsrate der Übertragungsumgebungsinformationen bestimmt wird.

11. Das Zugangspunktschaltverfahren nach Anspruch 9, wobei das Bestimmungskriterium, welches in mehreren Stufen festgesetzt ist, auf Basis der Fluktuationsrate der Empfangsumgebungsinformation und der Übertragungsumgebungsinformationen oder der Empfangsumgebungsinformation und der Fluktuationsrate der Übertragungsumgebungsinformationen bestimmt wird.

12. Das Zugangspunktschaltverfahren nach Anspruch 10, wobei die Zeittoleranz des Bestimmungskriteriums des Zugangspunkt-Suchzeitbestimmungsprozesses und des Übergabezeitpunkt-Bestimmungsprozesses umso länger ist, je höher die Fluktuationsrate der Empfangsumgebungsinformation oder die Fluktuationsrate der Übertragungsumgebungsinformationen ist.

13. Das Zugangspunktschaltverfahren nach Anspruch 8, wobei jede der Empfangsumgebungsinformation und der Übertragungsumgebungsinformationen durch eine beliebige Anzahl an Kommunikationsparametern, die auf die entsprechende Umgebung hinweisen, erstellt wird, vorbestimmte Gewichtungen auf die Kommunikationsparameter jeder der Umgebungen angewendet werden und die gewichteten Kommunikationsparameter kombiniert werden.

14. Ein Zugangspunktschaltkontrollprogramm, um einen Computer als ein Kommunikationsendgerät zum Durchführen von Kommunikation mit einem Zugangspunkt ausführen zu lassen:
einen Empfangsumgebungsinformationsmessprozess zur Messung von Informationen der Empfangsumgebung zwischen dem Kommunikationsendgerät und dem Zugangspunkt, wobei das Programm den Computer ausführen lässt:
einen Empfangsumgebungsinformationsmessprozess zur Messung von Informationen der Übertragungsumgebung zwischen dem Kommunikationsendgerät und dem Zugangspunkt, wobei die Übertragungsumgebungsinformation mindestens eine Paketübertragungsfehlerrate, eine Wiederübertragungsrate oder eine Übertragungsgeschwindigkeit ist;
einen Zugangspunkt-Suchzeitbestimmungsprozess zur Bestimmung eines Zeitpunkts der Suche nach dem Zugangspunkt, bei dem das Kommunikationsendgerät geschaltet wird, durch Verwendung einer Kombination aus einem ersten Vergleichsergebnis und einem zweiten Vergleichsergebnis, wobei das erste Vergleichsergebnis ein Vergleichsergebnis zwischen der Empfangsumgebungsinformation und einer ersten Schwelle (243, 243₁, 243₂) zur Bestimmung des Suchzeitpunkts ist, das zweite Vergleichsergebnis ein Vergleichsergebnis zwischen der Übertragungsumgebungsinformation und einer zweiten Schwelle (243, 243₁, 243₂) zur Bestimmung des Suchzeitpunkts ist, wobei die Empfangsumgebungsinformation ein Empfangspegel, eine Wiederaufnahmerate und/oder eine Empfangspaketfehlerrate ist;
einen Zugangspunkt-Suchprozess für die Suche nach dem Zugangspunkt, zu dem das Kommunikationsendgerät an dem bestimmten Zugangspunkt-Suchzeitpunkt zu schalten ist;
einen Übergabezeitpunkt-Bestimmungsprozess zur Bestimmung eines Zeitpunkts der Übergabe an den Zugangspunkt an den das Kommunikationsendgerät durch eine Kombination von einem dritten Vergleichsergebnis und einem vierten Vergleichsergebnis zu schalten ist, wobei das dritte Vergleichsergebnis ein Vergleichsergebnis zwischen Empfangsumgebungsinformation und einer dritten Schwelle (244, 244₁, 244₂) zur Bestimmung des Zeitpunktes der Übergabe ist, das vierte Vergleichsergebnis ein Vergleichsergebnis zwischen Übertragungsumgebungsinformationen und einer vierten Schwelle (244, 244₁, 244₂) zur Bestimmung der Übergabezeit ist; und
einen Übergabeprozess zum Ausführen der Übergabe an den Zugangspunkt, ermittelt durch den Zugangspunkt-Suchprozess am von dem Übergabezeitpunkt-Bestimmungprozess bestimmten Übergabezeitpunkt.

## Revendications

1. Terminal de communication comprenant une unité de mesure des informations sur l'environnement de réception (221, 222) permettant de mesurer les informations d'environnement de réception entre le terminal de communication et un point d'accès, le terminal de communication comprenant:
une unité de mesure des informations d'environnement de transmission (219, 220) permettant de mesurer les d'informations de l'environnement de transmission entre le terminal de communication et le point d'accès, les informations sur l'environnement de transmission étant composées d'au moins l'un des éléments que sont le taux d'erreur de paquets de transmission, le taux de retransmission, et le taux de transmission;
une unité de détermination de minutage de recherche de point d'accès (211) permettant de déterminer un minutage de recherche d'un point d'accès à commuter en utilisant une combinaison d'un premier résultat de comparaison et d'un deuxième résultat de comparaison, le premier résultat de comparaison étant un résultat de comparaison entre les informations sur l'environnement de réception et un premier seuil (243, 243₁, 243₂) permettant de déterminer le minutage de recherche, le deuxième résultat de comparaison étant un résultat de comparaison entre les informations sur l'environnement de transmission et un deuxième seuil (243, 243₁, 243₂) permettant de déterminer le minutage de recherche, les informations sur l'environnement de réception étant composées d'au moins l'un des éléments que sont le niveau de réception, le taux de reréception, et le taux d'erreur de paquets de réception;
une unité de recherche de point d'accès (223) pour rechercher le point d'accès à commuter au niveau du minutage de recherche de point d'accès déterminé par l'unité de détermination de minutage de recherche de point d'accès;
une unité de détermination de minutage de transfert (211) permettant de déterminer un minutage de transfert vers le point d'accès à commuter en utilisant une combinaison d'un troisième résultat de comparaison et d'un quatrième résultat de comparaison, le troisième résultat de comparaison étant un résultat de comparaison entre les informations sur l'environnement de réception et un troisième seuil (244, 244₁, 244₂) permettant de déterminer le minutage de transfert, le quatrième résultat de comparaison étant un résultat de comparaison entre les informations sur l'environnement de transmission et un quatrième seuil (244, 244₁, 244₂) permettant de déterminer le minutage de transfert; et
une unité de transfert (224) permettant de réaliser le transfert vers le point d'accès recherché par l'unité de recherche de point d'accès lors du minutage de transfert déterminé par l'unité de détermination de minutage de transfert.

2. Terminal de communication selon la revendication 1, où un critère de détermination de chacun de l'unité de détermination de minutage de recherche de point d'accès (211) et l'unité de détermination de minutage de transfert (211) est défini en une pluralité d'étapes.

3. Terminal de communication selon la revendication 2, où le critère de détermination qui est défini en une pluralité d'étapes est déterminé sur la base du taux de fluctuation des informations sur l'environnement de réception ou du taux de fluctuation des informations d'environnement de transmission.

4. Terminal de communication selon la revendication 2, où le critère de détermination qui est défini en une pluralité d'étapes est déterminé sur la base du taux de fluctuation des informations sur l'environnement de réception et des informations d'environnement de transmission, ou des informations sur l'environnement de réception et du taux de fluctuation des informations sur l'environnement de transmission.

5. Terminal de communication selon la revendication 2, où le critère de détermination qui est défini en une pluralité d'étapes est déterminé sur la base des informations sur l'environnement de réception, des informations d'environnement de transmission ou d'une combinaison des informations sur l'environnement de réception et des informations d'environnement de transmission.

6. Terminal de communication selon la revendication 3, où plus le taux de fluctuation des informations sur l'environnement de réception ou le taux de fluctuation des informations sur l'environnement de transmission est élevé, plus est longue la tolérance de temps du critère de détermination de l'unité de détermination de minutage de recherche de point d'accès (211) et de l'unité de détermination de minutage de transfert (211).

7. Terminal de communication selon la revendication 1, où chacune des informations sur l'environnement de réception et des informations d'environnement de transmission est construite par un nombre arbitraire de paramètres de communication indicatifs de l'environnement correspondant, des pondérations prédéterminées sont appliquées aux paramètres de communication de chacun des environnements, et les paramètres de communication pondérés sont combinés.

8. Procédé de commutation d'un point d'accès dans un terminal de communication, comprenant un processus de mesure des informations d'environnement de réception permettant de mesurer les informations sur l'environnement de réception entre le terminal de communication et le point d'accès, le procédé englobant:
un processus de mesure des informations d'environnement de transmission permettant de mesurer les informations sur l'environnement de transmission entre le terminal de communication et le point d'accès, les informations sur l'environnement de transmission étant composées d'au moins l'un des éléments que sont le taux d'erreur de paquets de transmission, le taux de retransmission, et le taux de transmission;
un processus de détermination de minutage de recherche de point d'accès permettant de déterminer un minutage de recherche d'un point d'accès auquel commuter le terminal de communication en utilisant une combinaison d'un premier résultat de comparaison et d'un deuxième résultat de comparaison, le premier résultat de comparaison étant un résultat de comparaison entre les informations sur l'environnement de réception et un premier seuil (243, 243₁, 243₂) permettant de déterminer le minutage de recherche, le deuxième résultat de comparaison étant un résultat de comparaison entre les informations sur l'environnement de transmission et un deuxième seuil (243, 243₁, 243₂) permettant de déterminer le minutage de recherche, les informations sur l'environnement de réception étant composées d'au moins l'un des éléments que sont le niveau de réception, le taux de reréception, et le taux d'erreur de paquets de réception;
un processus de recherche de point d'accès pour rechercher le point d'accès auquel commuter le terminal de communication selon le minutage de recherche de point d'accès déterminé;
un processus de détermination de minutage de transfert permettant de déterminer un minutage de transfert vers le point d'accès auquel commuter le terminal de communication en utilisant une combinaison d'un troisième résultat de comparaison et d'un quatrième résultat de comparaison, le troisième résultat de comparaison étant un résultat de comparaison entre les informations sur l'environnement de réception et un troisième seuil (244, 244₁, 244₂) permettant de déterminer le minutage de transfert, le quatrième résultat de comparaison étant un résultat de comparaison entre les informations sur l'environnement de transmission et un quatrième seuil (244, 244₁, 244₂) permettant de déterminer le minutage de transfert; et
un processus de transfert (224) permettant de réaliser le transfert vers le point d'accès recherché par le processus de recherche de point d'accès lors du minutage de transfert déterminé par le processus de détermination de minutage de transfert.

9. Procédé de commutation de point d'accès selon la revendication 8, où un critère de détermination de chacun du processus de détermination de minutage de recherche de point d'accès et du processus de détermination de minutage de transfert est défini en une pluralité d'étapes.

10. Procédé de commutation de point d'accès selon la revendication 9, où le critère de détermination qui est défini en une pluralité d'étapes est déterminé sur la base du taux de fluctuation des informations sur l'environnement de réception ou du taux de fluctuation des informations d'environnement de transmission.

11. Procédé de commutation de point d'accès selon la revendication 9, où le critère de détermination qui est défini en une pluralité d'étapes est déterminé sur la base du taux de fluctuation des informations sur l'environnement de réception et des informations d'environnement de transmission, ou des informations sur l'environnement de réception et du taux de fluctuation des informations sur l'environnement de transmission.

12. Procédé de commutation de point d'accès selon la revendication 10, où plus le taux de fluctuation des informations sur l'environnement de réception ou le taux de fluctuation des informations sur l'environnement de transmission est élevé, plus est longue la tolérance de temps du critère de détermination du processus de détermination de minutage de recherche de point d'accès et du processus de détermination de minutage de transfert.

13. Procédé de commutation de point d'accès selon la revendication 8, où chacune des informations sur l'environnement de réception et des informations d'environnement de transmission est construite par un nombre arbitraire de paramètres de communication indicatifs de l'environnement correspondant, des pondérations prédéterminées sont appliquées aux paramètres de communication de chacun des environnements, et les paramètres de communication pondérés sont combinés.

14. Programme de contrôle de commutation de point d'accès pour transformer un ordinateur en terminal de communication pour assurer une communication avec un point d'accès et réaliser
un processus de mesure des informations d'environnement de réception permettant de mesurer les d'informations de l'environnement de réception entre le terminal de communication et le point d'accès, le programme étant adapté pour faire en sorte que l'ordinateur réalise:
un processus de mesure des informations d'environnement de transmission permettant de mesurer les d'informations de l'environnement de transmission entre le terminal de communication et le point d'accès, les informations sur l'environnement de transmission étant composées d'au moins l'un des éléments que sont le taux d'erreur de paquets de transmission, le taux de retransmission, et le taux de transmission;
un processus de détermination de minutage de recherche de point d'accès permettant de déterminer un minutage de recherche d'un point d'accès auquel commuter le terminal de communication en utilisant une combinaison d'un premier résultat de comparaison et d'un deuxième résultat de comparaison, le premier résultat de comparaison étant un résultat de comparaison entre les informations sur l'environnement de réception et un premier seuil (243, 243₁, 243₂) permettant de déterminer le minutage de recherche, le deuxième résultat de comparaison étant un résultat de comparaison entre les informations sur l'environnement de transmission et un deuxième seuil (243, 243₁, 243₂) permettant de déterminer le minutage de recherche, les informations sur l'environnement de réception étant composées d'au moins l'un des éléments que sont le niveau de réception, le taux de reréception, et le taux d'erreur de paquets de réception;
un processus de recherche de point d'accès pour rechercher le point d'accès auquel commuter le terminal de communication selon le minutage de recherche de point d'accès déterminé;
un processus de détermination de minutage de transfert permettant de déterminer un minutage de transfert vers le point d'accès auquel commuter le terminal de communication en utilisant une combinaison d'un troisième résultat de comparaison et d'un quatrième résultat de comparaison, le troisième résultat de comparaison étant un résultat de comparaison entre les informations sur l'environnement de réception et un troisième seuil (244, 244₁, 244₂) permettant de déterminer le minutage de transfert, le quatrième résultat de comparaison étant un résultat de comparaison entre les informations sur l'environnement de transmission et un quatrième seuil (244, 244₁, 244₂) permettant de déterminer le minutage de transfert; et
un processus de transfert permettant de réaliser le transfert vers le point d'accès recherché par le processus de recherche de point d'accès lors du minutage de transfert déterminé par le processus de détermination de minutage de transfert.
